# EUROPEAN PATENT APPLICATION

(11) **EP 2 704 239 A1**
(43) Date of publication of application: **05.03.2014**
(21) Application number: 12182269.6
(22) Date of filing: 29.08.2012
(51) Int. Cl.: H01M 4/92, B01J 13/00, B01J 23/42, C25B 11/04

(54) **Colloidal dispersions comprising precious metal particles and acidic ionomer components and methods of their manufacture and use**

(71) Applicant: SolviCore GmbH & Co KG, 63457 Hanau-Wolfgang (DE)
(72) Inventor: Binder, Matthias, D-63594 Hasselroth (DE); Heinz, Gerhard, D-63579 Freigericht (DE); Ghielmi, Alessandro, D-60325 Frankfurt am Main (DE); Dziallas, Holger, D-63538 Großkrotzenburg (DE); Baenisch, Volker, D-63526 Erlensee (DE)
(74) Representative: Starz, Karl Anton

(57) **Abstract**

The invention relates to colloidal dispersions comprising nano-sized precious metal particles (e.g. platinum or platinum alloy particles) and at least one ionomer component having acidic groups. The method for its manufacturing is based on a neutralization and dissolving process of a suitable precious metal precursor compound with a liquid acidic ionomer component, followed by a reduction step. Suitable precious metal precursors consist of precious metal atoms, hydrogen atoms, oxygen atoms and optionally carbon atoms. Examples for precursors are H₂Pt(OH)₆, Pd(OH)₂ or Ir(OH)₄, preferred reducing agents are aliphatic alcohols or hydrogen. The invention further relates to pre-products for the manufacture of such colloidal dispersions, namely to compositions which contain precious metal precursors and at least one acidic ionomer compound.

The colloidal precious metal dispersions are essentially free of contaminants such as salts or surfactants and may further contain electrically conductive or non-conductive support materials.

The colloidal precious metal dispersions can be used for the preparation of catalyst inks, ionomer layers, catalyst layers, electrodes or composite catalyst materials and find broad application in fuel cell technology (e.g. PEMFC, DMFC or water electrolysers).

## Description

### Field of invention

The invention relates to colloidal dispersions comprising nano-sized precious metal based particles and at least one ionomer component having acidic groups. A method for manufacturing such precious metal based colloidal dispersions is disclosed. In n this context, the invention further relates to a pre-product for their manufacture, namely to compositions which comprise a suitable precious metal precursor compound and at least one acidic ionomer compound. Finally, the invention relates to catalyst inks comprising such colloidal dispersions and to methods of using them for the manufacture of ionomer layers, catalyst layers, electrodes and composite catalyst materials.

By employing suitable reducing agents such as alcohols or hydrogen, the pre-product compositions which comprise a suitable precious metal precursor compound and at least one acidic ionomer compound are converted into colloidal dispersions of precious metal particles, which are stabilized by the acidic ionomer compound and are essentially free of other constituents such as organic polymers, ionic contaminants or surfactants.

The colloidal precious metal dispersions of the invention are particularly suited for the preparation of ionomer layers, catalyst layers and electrode layers without the need of subsequent purification steps.

### Background of invention

Nano-sized, colloidal platinum dispersions which are stabilized by surfactants or organic polymers are known in the prior art. Such colloidal dispersions are mostly employed for the production of catalyst materials for chemical synthesis and electrochemical applications; platinum particles are in this case typically deposited onto powdered support materials or porous supports, followed by washing and drying steps. From such colloidal dispersions platinum particles can also be deposited directly onto surfaces to produce thin catalytic layers. Gas diffusion electrodes (hereinafter abbreviated GDEs) for electrochemical devices can for instance be produced by depositing the platinum particles on the surface and/or interior of porous ceramic or carbon webs.

Further, the surfaces of ionomer membranes may also be catalyzed by deposition of platinum particles onto their surface from a colloidal platinum dispersion, followed by drying and washing.

Colloidal platinum dispersions are subject of substantial research for use also outside the field of chemical synthesis and electro-catalysis with potential applications in a wide variety of areas, including nanotechnology, medicine, environmental science (photo-oxidation of organic compounds) and the synthesis of novel materials with unique properties. To such purposes, platinum nanoparticles in dispersion can also be functionalized with various organic ligands to create organic/inorganic hybrid materials with advanced functionality.

Colloidal platinum dispersions are particularly useful for the preparation of catalysts and catalyst layers for fuel cells.

Fuel cells (FCs) are power generating electrochemical devices used or commercially foreseen for a wide range of different applications including, for instance, automotive drive train, stationary units for residential heating, embarqued auxiliary power units (APUs), portable electronic equipments, remote or portable back-up units, etc.

A PEM fuel cell (PEM-FC) is, more particularly, a fuel cell comprising a solid-polymer-electrolyte membrane (hereinafter referred to as "membrane" for sake of convenience) such as, for instance, a proton-conducting perfluoro-sulfonic acid membrane or a hydrocarbon acid membrane. A PEM fuel cell also comprises a cathode layer and an anode layer respectively located on each opposing side of the membrane. The anode and cathode layers are hereinafter also called "electrode layers" or "electro-catalyst layers".

Examples of PEM-FCs are hydrogen PEM-FCs, reformed-hydrogen PEM-FCs and direct methanol PEM-FCs (hereinafter abbreviated "DMFC"). In the anode layer, an appropriate electrocatalyst, generally a platinum electrocatalyst or a platinum-alloy electrocatalyst, causes the oxidation of the fuel (for instance hydrogen or methanol) generating, notably, positive hydrogen ions (protons) and negatively charged electrons (hydrogen oxidation reaction, HOR, in the case of hydrogen fuel). The membrane allows only the positively charged hydrogen ions to pass through it to reach the cathode layer, whereas the negatively charged electrons travel along an external circuit connecting the anode with the cathode, thus creating an electrical current. At the cathode side, the oxygen is reduced to water using the 4 electrons and protons coming from the anode side (oxygen reduction reaction, ORR). In the cathode layer, a suitable electrocatalyst, generally a platinum electrocatalyst, causes the electrons and the positively charged hydrogen ions to combine with oxygen to form water, which flows out of the cell. In general, the reactions occurring in a hydrogen or reformed-hydrogen PEM-FC can be summarized as follows:
Anode: 2 H₂ **→** 4 H+ + 4 e- (HOR)
Cathode: O₂ + 4 e- + 4 H+ **→** 2 H₂O (ORR)

The electrocatalysts generally used in PEM-FC comprise finely divided particles of platinum or platinum-alloys, usually supported on carbon black, in order to assure appropriate electrical conductivity and a large electrochemically active surface area. Usually, the electrode layers also comprise a proton conducting electrolyte, hereinafter called "ionomer".

In the case of reformed-hydrogen and direct methanol PEM-FCs, the electrocatalysts used for the anode layers are usually platinum-alloy electrocatalysts, and the platinum-alloy is generally a platinum-ruthenium alloy specifically designed to efficiently oxidize either the hydrogen-rich gas produced by a reformer in the case of a reformed hydrogen PEM-FC or the methanol in the case of a direct methanol PEM-FC (DMFC).

A PEM-FC usually comprises relatively thick porous gas diffusion layers, hereinafter abbreviated "GDLs". Such porous layers are located between the electrode layers and the flow field plates. Primary purposes of a GDL are to assure a better access of the reactant gases to the electrode layers and an efficient removal of water (in either liquid or vapor form) from the fuel cell, to enhance the electrical conductivity of the fuel cell assuring a better electrical contact between the electrode layers and the flow field plates and last but not least to provide the mechanical strength necessary to preserve the structural integrity of the electrode layers.

A GDL usually comprises carbon paper or carbon woven or nonwoven cloth, optionally treated with variable amounts of per- or partly-fluorinated polymers and/or carbon particle pastes in order to properly adjust its electrical conductivity, mechanical strength, hydrophobicity, porosity and mass-transport properties.

The GDL may present either a mono- or a bi-layer structure. When the GDL presents a bi-layer structure, it typically consists of a relatively thick macroporous layer (also called GDL-substrate) usually oriented towards the flow field plate, and a relatively thin microporous layer ("GDL-MPL"), usually oriented towards the electrode layer. The main purpose of the GDL-MPL is to reduce the contact resistance between the electrode layer and the macroporous GDL substrate and to provide effective wicking of the liquid water from the electrode layer (generally the cathode) to the macroporous substrate.

The membrane electrode assembly (hereinafter abbreviated "MEA") is a key component of the PEM-FC and has a significant influence on its end-use characteristics. The term MEA is generally used to indicate a multilayer structure comprising the combination of the membrane with the anode and the cathode layers and optionally, in addition, the two adjacent GDLs.

A PEM-FC generally consists of a stack usually comprising a large number of MEAs; each of them placed between the corresponding flow field plates. Several MEAs are stacked along with the corresponding flow field plates in a stack in order to produce high voltages for the desired application. Since the MEAs are electrically connected in series, the total PEM-FC stack current flows through all the MEAs simultaneously.

PEM-FCs may be operated under a wide range of different conditions (temperature; type, composition, flow rate and humidity of the inlet reactant gases, pressure, current, voltage, steady or highly dynamic, etc.). Such conditions strongly affect initial MEA performance (e.g. voltage delivered at specific current density) and/or MEA life-time.

The present invention is also suitable for providing improved membrane-electrode assemblies (MEAs) for PEM electrolysers.

PEM electrolysers generally have a similar structure to a PEM fuel cell, but they operate in a different way. During operation of the PEM fuel cell, reduction of oxygen takes place at the cathode and oxidation of hydrogen takes place at the anode of the fuel cell. The end effect is that water and electric power are produced. On the other hand, flow of current and electrodes are reversed in a PEM electrolyser, so that decomposition of water takes place.

The liberation of oxygen occurs at the anode ("oxygen evolution reaction" or "OER" for short) and the reduction of protons (H⁺), which pass through the polymer electrolyte membrane, takes place at the cathode ("hydrogen evolution reaction" or "HER" for short). The result is that water is decomposed into hydrogen and oxygen with the aid of electric current. The reactions can be summarized by the following equations:
Anode: 2 H₂O **→** O₂ + 4 H⁺ + 4 e- (OER)
Cathode: 4 H⁺ + 4 e- **→** 2 H₂ (HER)

An MEA for a PEM water electrolyser (herein-after also referred to as "electrolysis MEA") generally contains a polymer electrolyte membrane (for example Nafion® from DuPont) which is arranged in the manner of a sandwich construction between two electrodes and two porous current collectors (or gas diffusion layers) which are each mounted on the two sides of the electrodes. However, owing to the different requirements which electrolysis MEAs have to meet and the different operating conditions of electrolysers and conventional PEM fuel cells, there are important differences in the requirement profile for electrolysis MEAs. For example, Ir- or Ru-based electrocatalysts are typically used in the anode of a PEM-electrolysis MEA.

Catalyst layers for PEM fuel cells and PEM water electrolyzers are commonly produced by using an ink comprising an electrocatalyst and an ionomer dispersed in a solvent. The electrocatalyst is typically produced starting from a soluble precious metal salt (e.g. a platinum salt, optionally, in the case of Pt-alloy catalysts, mixed with base metal salts such as Co, Ni, Cu, Mn or Cr salts) and a support such as carbon black or other electronically conductive materials with high BET surface.

The precious metal salt (optionally with a base metal salt) is reduced with a suitable reducing agent in the presence of the support. This causes nano-sized metal particles (usually in the range of 1 to 10 nm) to be deposited on the support. The resulting electrocatalyst powder after washing and drying is mixed with an ionomer dispersion to obtain a suitable catalyst ink or paste. This ink is used to form a catalyst layer via film forming processes such as coating, printing or spraying.

### State of the Art

Processes to obtain nano-sized precious metal particles are known since a long time. US 3,992,512 describes a method in which platinum sulphite acid is decomposed via a complex process over colloidal sol route without using a stabilizer. This colloidal sol is adsorbed onto a carbon black and then reduced with hydrazine to platinum particles. It is possible to obtain small platinum particles of 2 nm in size, but not without sulphur contamination, which is caused by the process route.

US 6,462,095 describes a process in which water soluble precious metal salts are used to form nano-sized precious metal particles stabilized by cation-exchange polymers. Precious metal particles around 2 nm of size are obtained after reduction of water-soluble precious metal precursors such as hexachloroplatinic(IV)acid, hydroxydisulfitoplatinic acid, platinum nitrate, hexachloroiridic(IV) acid hydrate and similar compounds. In general, halogen anions, sulfur and sodium are left as impurities in the colloidal composition; therefore intensive purification is required before its use for fuel cell applications.

US 8,071,259 B2 teaches the reduction of water soluble precious metal salts, such as bis(ethanolammonium) hexahydroxoplatinate, in the presence of a temporary stabilizer, to obtain nano-sized precious metal colloids. After addition of ionomer and eventually carbon black, the colloidal composition is formed into a catalyst layer on a membrane or a GDL. Due to the presence of a polysaccharide stabilizer, which needs to be eliminated, the catalyst layer has to be post-treated with sulfuric acid or heat treated at high temperature to obtain proper fuel cell performance.

US 6,391,818 B1 describes a method to obtain nano-sized platinum particles supported on carbon black. The disclosed process uses water-soluble hexachloroplatinic(IV)acid hydrate as metal precursor, ammonia, a polymeric betaine surfactant as a stabilizer and hydroxymethanesulphinic acid sodium salt as reducing agent. To obtain good fuel cell performance and durability, intensive purification of the catalyst and/or the catalyst layer is required to eliminate surfactant and halogens. In particular, a hydrolysis step is required to decompose and eliminate the polymeric betaine surfactant.

JP 61-295388 discloses the preparation of a dispersion of precious metal particles in an ionomer resin solution by reduction of an aqueous solution of the metal precursor compound.

US 5,294,232 describes the preparation of a catalyst particle composition by reduction of a precious metal salt in the presence of an ion exchange resin.

L. Jiang et al. (Chemical Industry & Chemical Engineering Quarterly 14 (2) (2008), 137-143) describe a method in which platinum nanoparticles are synthesized in the presence of a cation-exchanged perfluorosulfonate ionomer. The method uses hexachloroplatinic acid as metal precursor in combination with sodium hydroxide, which causes high concentrations of chlorine (a well known catalyst poison). Furthermore the sodium stemming from the hydroxide blocks the proton transport function of the ionomer. To obtain a usable catalyst/ionomer mixture, intensive washing and acid exchange steps to reprotonate the ionomer are required.

A. Dalmia et al. (J Colloid Interface Sci. 1998 Sep 15; 205, 535-537) describe a process named "Synthesis of Ion Conducting Polymer Protected Nanometer Size Platinum Colloids". Nano-sized platinum particles are obtained by reduction of hexachloroplatinic acid in the presence of a negatively charged polymer poly(N-sulfonatopropyl p-benzamide). The drawbacks of this approach are the same as mentioned above (L. Jiang et al.).

WO 2005/097314 A1 discloses a method to produce platinum catalysts by reducing in-situ formed platinum dioxide (PtO₂) on a carbon support. Dihydrogen hexahydroxy-(IV)-platinate (H₂Pt(OH)₆) is dissolved in a concentrated acid such as nitric acid. Before reducing the platinic acid, the solution is neutralized with concentrated ammonia. All these steps generate the need of intensive washing of the obtained catalyst. A stabilizing polymer, whether temporary or not, is not used.

As shown in the description above, the prior art teaches methods to synthesize nano-sized precious metal colloid compositions containing surfactants, salts and ionic species which need to be eliminated after the colloid is used for fabrication of electrocatalyst materials or catalytic layers. This elimination requires laborious and extensive washing and purification steps. In the case where the precious metal particles need to be mixed with ionomer, such as in fuel cell or PEM-electrolysis catalyst layers, the washing and purification steps need to be carried out before the ionomer is added to the electrocatalyst to obtain a catalyst ink or they have to be carried out after the catalyst ink is formed into a catalyst layer. In both cases, complicated and expensive steps in the catalyst layer production process are necessary.

In order to obtain well distributed nano-sized precious metal particles, water soluble precious metal salts are normally used. These salts allow obtaining nano-particles in a narrow particle size distribution range after chemical reduction step, which may be carried out in the presence of a surfactant, a polymeric stabilizer (including an ionomer) or a powdered substrate, such as carbon black. Ionic species resulting from the water soluble precious metal salts, such as chloride, are still present. These need to be eliminated and require extensive purification steps.

In short, colloidal dispersions comprising nano-sized precious metal particles, preferably platinum particles, mixed with ionomer and essentially free of other constituents such as stabilizers, surfactants, salts, acids, and ionic species have not been made available. Such colloidal dispersions could be used directly for fabrication of fuel cell and PEM-electrolysis (electro)-catalyst layers without the necessity of complex cleaning steps.

To reduce the overall costs of the manufacturing of electrocatalysts, catalyst layers and other components, the need was felt for colloidal dispersions comprising solely nano-sized precious metal particles and ionomer in acidic form and solvent. Such liquid compositions should be free from stabilizers, surfactants, residual salts, low molecular weight acids, ionic species, and in general species which are detrimental to the proper catalytic functionality.

### Summary of the invention

It is a general objective of the present invention to provide liquid compositions (hereinafter also referred to as colloidal dispersions) comprising nano-sized precious metal particles and an ionomer component comprising acidic groups, both dispersed in a fluid. The ionomer, which comprises acidic groups, may act as a stabilizer or capping agent for the nano-sized precious metal particles. The colloidal dispersions are essentially free of other constituents such as organic polymers, surfactants, salts, acids, and ionic species, which otherwise need to be eliminated from the composition to achieve proper catalytic functionality. In the context of this application, the liquid compositions and colloidal dispersions cited above will also be referred to as "catalyst inks" (either with or without a support material in addition to the precious metal particles and ionomer).

It is a further objective of the invention to provide a pre-product composition comprising a suitable precious metal precursor compound dispersed in a liquid medium containing at least one acidic ionomer compound.

It is a still further objective of the present invention to provide a method for the manufacture of the colloidal precious metal dispersions described above.

A further objective of the present invention is to provide catalyst inks which comprise, in addition to precious metal particles and the ionomer component, a support material, preferably an electrically conductive support material such as carbon black or a conductive oxide.

A still further objective of the present invention is to provide various methods of use for the colloidal dispersions described above, e.g. for the production of ionomer layers, catalyst layers, electrode layers and composite catalyst materials. Such materials and uses may be applied in PEM fuel cells, direct methanol fuel cells (DMFC) or PEM water electrolyzers.

These various objectives are solved by the provision of colloidal precious metal dispersions, its pre-products (precursor products), manufacturing methods and processes, methods of use and applications as described in the present application and the claims enclosed.

### Detailed description of the invention

The invention refers to a liquid composition ("pre-product") comprising a precious metal precursor compound and at least one acidic ionomer compound, said precious metal precursor compound consisting of precious metal atoms, hydrogen atoms, oxygen atoms and optionally carbon atoms. Preferably the precious metal precursor compound has a low water solubility in the range of 0.0001 (10⁻⁴) to 0.1 mol/l (as determined at 22°C). The precious metal of the precursor compound is defined later in this specification. Preferably, the precious metal precursor compound is a precious metal hydroxide, a precious metal hydroxo complex, a hydrated oxide of a precious metal or a mixture or combination thereof.

Further, the invention refers to a colloidal dispersion comprising nano-sized precious metal particles stabilized by an acidic ionomer compound, said colloidal dispersion being obtained by a reduction process of the "pre-product" as defined above. Said colloidal dispersion is obtained by a reduction process for a time period of 1 to 120 hours at temperatures in the range of 5 to 40°C, preferably at temperatures in the range of 20 to 25°C.

Preferably, the liquid composition ("pre-product") and the colloidal dispersion are water-based. By "water-based" it is meant that a portion of more than 50% of the solvent system of the formulations (i.e. the liquid composition or colloidal dispersion) is consisting of water (i.e. pure water or deionized (D.I.) water). However, the present invention also refers to non-water based liquid compositions and non water-based colloidal dispersions, which may contain larger amounts of organic solvents in addition to water or may be completely water-free.

In a further embodiment, the colloidal dispersion further comprises electrically conductive and/or electrically non-conductive support materials.

Still further, the invention is related to a method for preparing a colloidal, precious metal dispersion comprising precious metal particles and an acidic ionomer, comprising the steps of
(a) mixing at least one precious metal precursor compound consisting of precious metal atoms, hydrogen atoms, oxygen atoms and optionally carbon atoms with an acidic ionomer, and
(b) reducing the precious metal precursor compound with a reducing agent to form precious metal particles stabilized by said acidic ionomer.

In a further embodiment, a base metal compound is added in step (a), said base metal compound being selected from the group of base metal hydroxides, base metal oxides, base metal carbonates and mixtures and combinations thereof.

In a still further embodiment, the mixing step (a) and the reducing step (b) are conducted separately. However, in an optional variant, the mixing step (a) and the reducing step (b) are conducted simultaneously within a time period of 1 to 120 hours, preferably within a time period of 1 to 48 hours.

Generally, as outlined later in the specification, the colloidal dispersion of the invention may contain an electrically conductive and/or electrically non-conductive support material. The support material can be added at any time in the preparation process, preferably the support material is added in the mixing step (a) or between mixing step (a) and reducing step (b).

It was surprisingly found that certain precious metal precursor compounds (consisting of precious metal, hydrogen, oxygen and optionally carbon atoms and having a low solubility in water) can be reduced by a reducing agent to yield nano-sized precious metal particles in the presence of an acidic ionomer component. Hereby, the nano-sized precious metal particles are stabilized by the acidic ionomer. This reaction results in a liquid medium comprising nano-sized precious metal particles and an acidic ionomer component dispersed in a liquid composition, such composition being essentially free from other constituents such as organic polymers, surfactants, salts, acids, and ionic species, which need to be eliminated from the composition to achieve proper functionality (with proper functionality is meant that no detrimental interference occurs with the electro-catalytic, chemical and physical processes taking place during the operation of a PEM fuel cell or a PEM water electrolyzer).

In particular, it was surprisingly found that precious metal precursors which should be essentially insoluble in water, but soluble in acids, after mixing intimately with an ionomer dispersion, may be reduced by a suitable reducing agent to yield nanometer sized precious metal particles stabilized by the ionomer. This results in a colloidal dispersion comprising nano-sized precious metal particles and an acidic ionomer compound dispersed in a fluid.

Generally, the nano-sized precious metal particles in the colloidal dispersion of the present invention show an average particle size in the range of 0.5 nm to 100 nm, preferably in the range of 1 nm to 50 nm and particularly preferred in the range of 2 nm to 20 nm (as detected by REM/TEM). It has been found that such nano-sized precious metal particles can be obtained in a narrow particle size distribution by the method of the present invention. By the term "average particle size" it is meant the number-average particle size of the distribution (ref to Experimental section). By the terms "nanometer-sized", "nano-sized" and "nano", in the context of the present application, it is meant dimensions ranging from about 0.5 to about 500 nanometers.

### Principle of invention

As already outlined above, a suitable precious metal precursor compound (consisting of precious metal, hydrogen, oxygen and optionally carbon atoms and having a low solubility in water) may be reduced to the corresponding metal particles in the presence of an ionomer compound bearing acidic groups. Without being bound by theory, the basic mechanism of the present invention may be visualized by the following schematic equations:
Equation (1): Neutralisation and dissolution

   M(OH)ₓ + R_{f}(SO₃H)ₓ < = = > R_{f}(SO₃⁻)ₓ M^{x+} + x H₂O (1)
Equation (2): Reduction

   R_{f} (SO₃⁻)ₓ M^{x+} + R_{A,R} = = > R_{f}(SO₃H)ₓ + M^{o} + R_{A,O} (2)
Equation (3): Nucleation and growth

   M^{o} = = > M^{o}_{_}nano-particle (stabilized) (3)
with x being an integer between 1 and 6.

In the equations above, M(OH)ₓ stands for the precious metal compound consisting of precious metal, hydrogen, oxygen and optionally carbon, R_{f} represents the polymer chain of the ionomer, (SO₃H)ₓ represents the acid groups of the ionomer attached to the R_{f} chain involved in the reaction, R_{f} (SO₃⁻)ₓ M^{x+} represents the precious metal ion dissolved into the ionomer after neutralisation, R_{A,R} is the reducing agent in its reduced state, M^{o} is the precious metal in its reduced (metallic) state, R_{A,O} is the reducing agent in its oxidized state and M^{o}_nano-particle is the nano-sized precious metal particle stabilized by the ionomer.

R_{f}(SO₃H)ₓ may represent one or more ionomer chains, i.e. (SO₃H)ₓ belonging to one or more ionomer chains may be involved in the reaction and more than one ionomer chain may be involved in stabilizing the M^{o}_nano-particle.

Equation (1) shows that the acid ionomer R_{f}(SO₃H)ₓ acts in dissolving the essentially water-insoluble precious metal precursor compound and is neutralized upon the dissolution process by the metal ion M^{x+} (eventually only partially; the SO₃H groups not involved in the reaction are not shown in the equations). The ionomer is then re-protonated upon reduction of the metal by the R_{A,R} reducing agent, as shown in equation (2), thus setting free the ionomer acid groups for further M(OH)ₓ dissolution as shown in equation (1).

For reasons of simplicity, the principle of the invention is exemplified in equations (1) to (3) for a hydroxide compound M(OH)ₓ, but the same mechanism holds true for a hydroxo complex of the general formula H_{z}M(OH)ₓ (with x being defined above and z being an integer between 1 and 4), or a hydrated oxide of general formula MₐO_{b} x n H₂O (with a, b independently from each other being an integer between 1 and 4 and n being a numeral between 0.1 and 10).

However, the same mechanisms may be applicable to precious metal precursors consisting of precious metal, hydrogen, oxygen and carbon atoms, such as basic precious metal carbonates (e.g. Ag₂CO₃).

Also, for reasons of simplicity, the principle of the invention is exemplified in equations (1) to (3) for an ionomer comprising sulfonic SO₃H groups, but the same mechanism holds true for ionomers comprising different acidic groups, as detailed below in the present application.

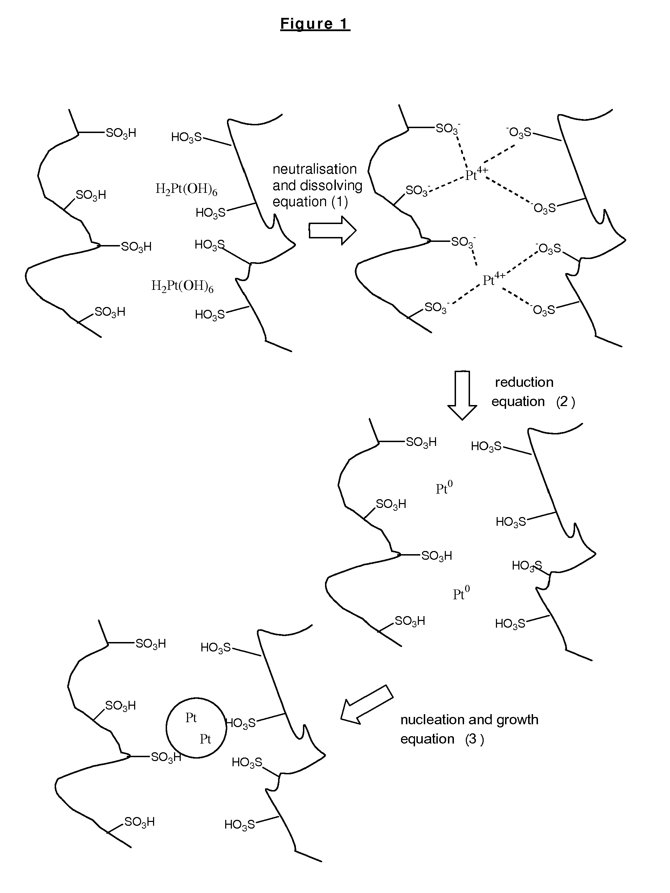

The proposed mechanism is shown in schematic drawing in **Figure 1****.** For reasons of simplicity only, H₂Pt(OH)₆ is used in this drawing as the precious metal compound. This precursor compound may be present in aqueous acidic solution in a Pt(OH)₄ species according to the following equation (4)

H₂Pt(OH)₆ ==> Pt(OH)₄ + 2 H₂O (4)

As already stated, the precious metal precursor should have a low solubility in water. Therefore, it is thoroughly dispersed in the acidic ionomer dispersion. In the course of the neutralization reaction between M(OH)ₓ and the acidic ionomer R_{f}(SO₃H)ₓ, the precursor compound is slowly dissolving and gradually reduced by the action of a reducing agent to yield a metallic precious metal particle (M^{o}), which is stabilized by the acidic ionomer compound.

Detailed scientific investigations may be necessary to fully understand the complex reactions involved in the present invention. In the following section, the different components are described in greater detail.

### The precious metal precursor compound

Generally, any precious metal compound (i) consisting of precious metal M, hydrogen, oxygen and optionally carbon atoms and (ii) having a low solubility in water may be used as precursor compound in the present invention.

Suitable precious metals M are selected from the group consisting of silver (Ag), gold (Au), platinum (Pt), palladium (Pd), iridium (Ir), ruthenium (Ru), rhodium (Rh) and mixtures and combinations thereof. Preferably, the precious metals M are selected from the group consisting of platinum (Pt), palladium (Pd), iridium (Ir), ruthenium (Ru), rhodium (Rh) and mixtures and combinations thereof. In a particularly preferred embodiment, the precious metals M are selected from the group consisting of platinum (Pt), palladium (Pd), iridium (Ir) and mixtures and combinations thereof.

In a preferred embodiment, the precious metal precursor compound consists of precious metal M, hydrogen and oxygen atoms and may comprise at least one hydroxyl group (OH-group). Such precursor compound can be characterized by the formula M(OH)ₓ (wherein x is an integer between 1 and 6). Examples for suitable precursor compounds are precious metal hydroxides of the type M(OH), M(OH)₂, M(OH)₃, M(OH)₄, M(OH)₅, and M(OH)₆ and mixtures thereof. Typically, such precursor compounds are basic or at least show some degree of basicity.

In another preferred embodiment, the precious metal precursor compound may be a hydroxo complex of the general formula H_{z}M(OH)ₓ (wherein, independently from each other, x is defined as above and z is an integer between 1 and 6). Examples are hydroxo complexes of the type H₂M(OH)₆, H₃M(OH)₆, H₂M(OH)₄, HM(OH)₄ and mixtures thereof.

In still another preferred embodiment, the precious metal precursor compound may be a hydrated oxide ("oxide hydrate") of general formula MₐO_{b} x n H₂O (wherein a, b independently from each other being an integer between 1 and 4 and n being a numeral between 0.1 and 10).

In a further embodiment, the precious metal precursor compound consists of precious metal M, hydrogen, carbon and oxygen atoms and may be a basic precious metal carbonate. An example is Ag₂CO₃.

Generally, the precious metal precursor compound should have a low solubility in deionized (D.I.) water; preferably, the precursor compound should be essentially insoluble in deionized water. By the term "deionized water" it is meant purified, desalinated water having a pH in the range of 5 to 7. By the term "essentially insoluble in water" it is meant that the water solubility of the precious metal precursor compound should be in the range of 0.0001 (10⁻⁴) to 0.1 (10⁻¹) mol/l, preferably in the range of 0.0001 to 0.05 mol/l at room temperature (i.e. at a temperature in the range of 20 to 25°C).

Furthermore, the precious metal precursor compound may be soluble in strong acids such as sulfuric acid, nitric acid, perchloric acid, trifluoroacetic acid and triflic acid (trifluoromethanesulfonic acid).

In particular, the precious metal precursor compound should be free of halide ions (F, Cl, Br and I anions). The absence of halide ions prevents contamination of the precious metal surface in the catalytic layers. Furthermore, complex cleaning steps to avoid such contamination are not necessary. It is in fact well known that halides, e.g. chlorides, act as pollutants for precious metal catalysts. Moreover, presence of halide ions can increase corrosion problems to metal parts in the fuel cell system. Typically, the concentration of halide ions (F, Cl, Br, I anions), in particular the concentration of chloride anions (Cl⁻) in the colloidal precious metal dispersion should be less than 500 ppm, preferably less than 100 ppm (detected as total halide content by the Wickbold-method).

Some examples for suitable precious metal precursor compounds are:

| | |
|---|---|
| for silver (Ag): | Ag(OH) |
| | Ag₂O x n H₂O (silver oxide hydrate) |
| for gold (Au): | Au(OH)₃ |
| for platinum (Pt): | H₂Pt(OH)₆, PtO₂ x n H₂O (platinum-(IV) oxide hydrate) |
| for palladium (Pd): | Pd(OH)₂, PdO x n H₂O (palladium-(II) oxide hydrate) |
| for iridium (Ir): | Ir(OH)₃, Ir(OH)₄, H₂Ir(OH)₆ |
| | Ir₂O₃ x n H₂O (iridium-(III) oxide hydrate), |
| | IrO₂ x n H₂O (iridium-(IV) oxide hydrate) |
| for ruthenium (Ru): | Ru(OH)₃, |
| | Ru₂O₃ x n H₂O (ruthenium-(III) oxide hydrate) |
| for rhodium (Rh): | Rh(OH)₃, |
| | Rh₂O₃ x n H₂O (rhodium-(III) oxide hydrate) |

Generally, the precursor compounds listed above are commercially available from various vendors. In most cases, they may be prepared by simple neutralization reactions using e.g. the acidic chloride compound, followed by precipitation, washing and optionally drying the precipitate. The applicable procedures and measures are well known to the person skilled in the art of precious metal chemistry.

The preferred precious metal precursor is dihydrogen hexahydroxy(IV)platinate having the formula H₂[Pt(OH)₆]. This precursor compound is provided as a yellow powder. Further preferred precursor compounds are iridium-(IV) hydroxide (Ir(OH)₄) and palladium-(II) hydroxide (Pd(OH)₂).

In a further embodiment of the invention, the liquid composition comprises precious metal precursors and may further comprise suitable base metal hydroxide, base metal oxide or base metal carbonate compounds. After reduction, such compositions yield colloidal dispersions with particles being alloys or mixtures of precious metals and base metals. Examples for suitable base metal precursor compounds are the hydroxides Co(OH)₂, Ni(OH)₂, Cu(OH)₂, Mn(OH)₂ or Cr(OH)₃ and mixtures and combinations thereof. Non-limiting examples of oxide compounds of the base metals are CoO, NiO, Cu₂O, CuO, MnO, MnO₂ and Cr₂O₃ and mixtures and combinations thereof. Examples of base metal carbonates are CoCO₃, NiCO₃, CuCO₃, MnCO₃ and Cr₂(CO₃)₃ and mixtures and combinations thereof.

### The ionom er dispersion

In the context of this invention, the term ionomer is defined as a polymer, in which a significant proportion of the monomer building blocks contain one or more ionic functionalities. Such ionic functionalities may be acidic groups selected from the group consisting of sulfonic acid groups (-SO₃H), phosphonic acid groups (-PO₃H₂), carboxylic acid groups (-COOH) and mixtures and combinations thereof. Ionic functionalities may also be imide groups (R_{f}-NH-R_{f}), which, when adjacent to fluorine-containing carbon chains, have strong acidic character. These can be, for example, bis-sulfonyl imide groups (R_{f}-SO₂-NH-SO₂-R'_{f}), bis-carbonyl imide groups (R_{f}-CO-NH-CO-R'_{f}) or sulfonyl-carbonyl imide groups (R_{f}-SO₂-NH-CO-R'_{f}), wherein R_{f} and R'_{f} are fluorine-containing carbon chains.

The ionomer may have a (per)fluorinated or hydrocarbon-based backbone. By "fluorinated" it is meant that a substantial amount of hydrogen atoms attached to carbon atoms in the macromolecular chain have been substituted by fluorine atoms. Preferred are perfluorinated sulfonic acid ionomers. By "perfluorinated" ionomer it is meant an ionomer in which all the hydrogen atoms attached to carbon atoms in the macromolecular chain have been replaced by fluorine atoms, or eventually, in smaller amounts, by heteroatoms like chlorine, iodine and bromine. Oxygen atoms and other heteroatoms like nitrogen, sulfur and phosphorus can also be incorporated in (per)fluorinated ionomers. Perfluorinated sulfonic acid ionomers are available commercially under the tradenames Nafion® (from E. I. du Pont de Nemours, US), Aquivion® (from Solvay Specialty Polymers S.p.A., IT), Aciplex™ (from Asahi Kasei Chemicals Corporation, JP) and Flemion® (from Asahi Glass Co., JP).

The ionomer materials are available as solutions or dispersions and are typically provided in pure, deionized water (D.I. water) or in aqueous compositions comprising organic solvents. Examples of acidic ionomer dispersions provided in pure water, eventually containing very small amounts (less than 1 wt.-%) of other organic compounds, are Nafion® D1020 and D1021 and Aquivion® D83-24B and D79-20BS.

Acidic ionomer dispersions are also frequently provided in compositions containing alcohols. Examples are Nafion® D520, D521, D2020, D2021, which contain about 44 to 48 wt.-% of 1-propanol or Aquivion® D83-06A, which is dispersed in a solvent matrix containing 40 wt.-% of 1-propanol and an equivalent amount of 2-propanol. In these cases, the alcohol already present in the ionomer dispersion may serve as the reducing agent and no additional reducing agent may be necessary.

Ionomers may also be provided as water-free liquid compositions in polar organic solvents. Cf. e.g. US 7,893,118 and WO 2012/069360 A2. Hydrocarbon-type ionomers are also often provided in pure alcohol compositions, eventually containing low amounts (<5 wt.-%) of water.

The ionomer content of the dispersions is typically in the range of 5 wt.-% to 30 wt.-%, preferably in the range of 10 wt.-% to 25 wt.-%, more preferably in the range of 15 wt.-% to 20 wt.-% based on the total weight of the dispersion.

### The reducing agent

Generally, the reducing agent may be introduced before or after the intimate mixing/dispersing of the precious metal precursor with the ionomer.

In one embodiment of the invention, the precious metal precursor compound is first intimately mixed with a liquid acidic ionomer compound. Thus, a stable precursor composition is prepared and the neutralization according to equation (1) takes place. This precursor composition may be stored in suitable containers and may be submitted to the reduction according to equation (2) as appropriate.

In another embodiment of the invention, the precious metal precursor compound and the reducing agent are both intimately mixed with the liquid acidic ionomer compound. In this case, the liquid composition (i.e. the colloidal dispersion) comprising nano-sized precious metal based particles is prepared in one single process.

In both cases, basically "clean" reducing agents should be employed, which, after reduction, do not leave any residues in the final liquid composition. Suitable reducing agents are, for example, hydrogen, hydrazine, formaldehyde, formic acid or oxalic acid.

Further, liquid reducing agents such as monovalent alcohols from the group of methanol, ethanol, 1-propanol, iso-propanol, 1-butanol, 2-butanol, 2-methyl-propan-1-ol, allyl alcohol and diacetone alcohol may be employed. Preferred reducing agents are primary alcohols selected from the group consisting of methanol, ethanol, 1-propanol, iso-propanol and 1-butanol and mixtures and combinations thereof. Further suitable liquid reducing agents are divalent alcohols such as ethylene glycol, propylene glycol, diethylene glycol or dipropylene glycol.

In cases where the alcohol is already present in the ionomer dispersion (as already described above), said alcohol may act as reducing agent and no additional reducing agent may be necessary.

Alternatively, if the precious metal precursor compound is dispersed in aqueous ionomer dispersion, it can be reduced by hydrogen without any additional solvent or reducing agent. Pure hydrogen as well as diluted hydrogen may be employed. Diluted hydrogen gas mixtures such as forming gas 80/20 (20 vol.-% hydrogen in 80 vol.-% nitrogen) or forming gas 95/5 (5 vol.-% hydrogen in 95 vol.-% nitrogen) are preferred.

Typically, the reduction process is taking place at temperatures in the range of 5 to 40°C, preferably at room temperature (i. e. in the range of 20 to 25°C). The lower temperatures in the range of 5 to 20°C may be applied when using strong reducing agents. Depending on the reducing agent and the reaction temperature employed, the reduction time is in the range of 1 hour to 5 days (120 hours), preferably in the range of 10 hours to 2 days (48 hours). After the reduction process, the resulting colloidal dispersion comprises nano-sized precious metal particles and an acid-form ionomer dispersed in pure water or a polar organic solvent or mixtures thereof.

### Preparation of a precious metal precursor/ionomer dispersion (pre-product)

As already outlined, the invention further relates to a pre-product of the colloidal precious metal/ionomer dispersions, namely to compositions which comprise a suitable precious metal precursor compound and at least one acidic ionomer compound. In this embodiment, the reducing agent may be introduced after the intimate mixing/dispersing of the precious metal precursor with the ionomer. Hereby a liquid composition comprising the precious metal precursor compound and the acidic ionomer is prepared. Thus, a stable pre-product is obtained in which the neutralization reaction and dissolution according to equation (1) has taken place.

Generally, the intimate mixing of the precious metal precursor with the ionomer dispersion may be conducted by use of various dispersing equipments. Examples are high-speed stirrers, roll mills, vertical or horizontal bead mills, speed-mixers, magnetic mixers, mechanical mixers, ultrasonic mixers, high-shear mixers, micro-fluidizers, rotor-stator mixers and dissolvers.

In the pre-product, the concentration of the precious metal precursor compound is typically in the range of 0.1 wt.-% to 50 wt.-%, preferably in the range of 0.1 wt.-% to 20 wt.-%, more preferably in the range of 0.5 wt.-% to 15 wt.-% based on the total weight of the composition.

The pre-product can be stored in suitable containers and may be submitted to a later reduction reaction according to equation (2) as appropriate.

### Preparation of the colloidal precious metal/ionomer dispersion

A further objective of the present invention is to provide a method for the preparation of colloidal precious metal/ionomer dispersions. This method comprises dispersing a non-water soluble precious metal precursor in an ionomer dispersion, and reducing the precious metal to nano-sized particles with the aid of a reducing agent. Suitable ionomer materials are normally already provided as liquid formulations and, in the process above, the precious metal precursor is typically added to the ionomer composition and intimately mixed with it.

However, by "dispersing a non-water soluble precious metal precursor in an ionomer dispersion" it is also meant that the ionomer, as a powder in acidic form and the precious metal precursor may be mixed together in a liquid medium, typically water, and the mixture thus obtained may be subjected to a dissolution step, typically at high temperature, as applied to obtain ionomer dispersions (cf. e.g. US 7,893,118), and additionally subjected to high-shear mixing, to obtain a precious metal precursor intimately dispersed within the ionomer dispersion.

As already outlined in the previous sections, the intimate mixing of the precious metal precursor with the ionomer dispersion may be conducted by use of various dispersing equipments (ref to list given above).

When a liquid reducing agent is used, its concentration is in the range of 10 wt.-% to 70 wt.-%, preferably in the range of 20 wt.-% to 50 wt.-% based on the composition of the liquid composition. According to this embodiment, when an alcohol is employed as reducing agent, the excess alcohol remains in the colloidal dispersion after reduction and serves as a formulating solvent, typically reducing the surface tension, so that the liquid composition can be fabricated to a continuous catalytic layer.

Typically, the reduction process is taking place at temperatures in the range of 5 to 40°C, preferably at room temperature (i.e. in the range of 20 to 25°C). Further details are given above. After the reduction process, the resulting colloidal dispersions comprise nano-sized precious metal particles and an acid-form ionomer dispersed in pure water or a polar organic solvent or mixtures thereof.

After the reduction process, the concentration of the resulting colloidal precious metal particles is typically in the range of 0.1 wt.-% to 25 wt.-%, preferably in the range of 0.2 wt.-% to 10 wt.-%, based on the total weight of the liquid composition.

The precious metal/ionomer weight ratio of the colloidal dispersion is typically in the range of 1:5 to 1 :50, preferably in the range of 1:10 to 1 :40 and particularly preferred in the range of 1 :15 to 1 :35.

It is apparent by the description given above, that, since no additional compounds such as organic polymers, surfactants, salts, acids or ionic species are added to the liquid composition other than the precious metal precursor, ionomer, the dispersing fluid and a reducing agent, if the reducing agent is chosen appropriately, the resulting liquid composition will be absolutely clean from any polluting species. Therefore, the liquid composition is ideal for the fabrication of catalytic layers with optimal functionality, both from the point of view of performance and durability. When specifically referring to fuel cells, also the so called "conditioning" or "break-in" behavior of a membrane-electrode assembly (MEA), i.e. the time period from cell start to maximum performance of the MEA within the cell, will be positively shortened by the use of highly pure inks obtainable by the present invention for the fabrication of catalytic layers as described in the following sections.

### Precious metal containing ionomer layers (without support material)

Catalytic layers comprising nano-sized precious metal particles, particularly platinum particles and ionomer may be fabricated from the colloidal dispersions of the present invention by casting or printing the liquid composition on a suitable substrate by any technique known in the art, followed by drying/evaporating the liquid medium. After drying, the catalytic layers obtained by the application of the colloidal precious metal dispersions described above, comprise precious metal (e.g. platinum) particles mixed with or embedded into the ionomer component. Drying of the wet deposits is conducted by conventional means known to the skilled person in printing technology. The layers thus obtained may serve as electrocatalytic layers, i.e. anode or cathode of a fuel cell or a PEM-electrolyzer, in case enough precious metal is added to the layer to render it electrically conductive.

Alternatively, if low enough amounts of precious metal are employed, non-electrically but ionically conductive catalytic layers are obtained. Again, the precious metal particles are well dispersed at the nanometer scale within the ionomer matrix. Such layers, in particular when e.g. platinum is employed as precious metal, show excellent behavior in preventing the hydrogen crossover in a fuel cell or in a PEM water electrolyzer from one side to the other (anode to cathode side in a fuel cell and cathode to anode side in a PEM-electrolyzer), by reacting the hydrogen with the oxygen coming from the opposite side (i.e. as a gas-phase active layer promoting the catalytic combustion of hydrogen into water).

In a PEM fuel cell, the presence of such a gas-phase active layer results in a higher open circuit voltage (OCV) and lower degradation due to reduced peroxide radical generation.

In a PEM water electrolyzer, lower levels of hydrogen in the produced oxygen are obtained, with substantial advantage from the safety point of view, particularly when operating under high pressures.

The catalytic layer (catalytic combustion layer) is preferably positioned in proximity of the oxygen electrode, e.g. between the membrane and the oxygen electrode, but can also be positioned in proximity of the hydrogen electrode, or on both sides, and may also extend substantially throughout the membrane. In the extreme case, the catalytic layer may extend throughout the whole membrane.

A similar catalytic combustion layer may be employed in DMFC to prevent or limit methanol crossover from the anode to the cathode side. Methanol cross-over is well known to be a critical issue for this kind of fuel cells. The methanol permeating through the membrane reacts with the oxygen from the cathode side on the precious metal (preferably platinum or platinum-alloy) nano-particles embedded in the ionomer in the catalytic layer, thus preventing the methanol to reach and depolarize the cell cathode. Therefore, higher cell potentials, i.e. higher cell efficiencies, may be achieved for DMFC.

In either case, after drying and removal of the solvents, the precious metal/ionomer weight ratio in such catalytic combustion layers is typically in the range of 1:5 to 1:50, preferably in the range of 1:10 to 1:40, more preferably in the range of 1 : 15 to 1 :35.

### Catalyst inks (with support material)

Generally, the colloidal precious metal dispersions of the invention may be mixed with suitable support material to generate liquid catalyst compositions or catalyst inks. Suitable electrically non-conductive support materials include inorganic, high surface area oxides or salts selected from the group consisting of alumina, silica, titania, ceria, zirconia, calcium carbonate, barium sulfate and mixtures and combinations thereof. Further, typical carbon-based support materials used for heterogeneous catalysts (such as activated carbon or charcoal) may be employed. Such catalyst inks containing colloidal precious metal particles, support material and ionomer components may be used for coating of ceramic or metallic substrates (honeycombs, monoliths, foams etc).

Thus, the colloidal precious metal dispersions of the present invention constitute a viable intermediate for the preparation of catalyst compositions outside the area of electrocatalysis, e.g. in the area of chemical catalysis and gas-phase active catalysts. To this aim, the catalyst particles are deposited onto or precipitated in the presence of a suitable high-surface area support material to obtain a supported chemical catalyst. Such catalyst materials, comprising precious metal nano-particles on non-conductive supports mixed with ionomer, and eventually formed into a thin layer, may be used for different catalytic applications (e.g. for catalytic combustion layers as already explained above).

In a further embodiment of the invention, the colloidal precious metal dispersions may be mixed with electrically conductive support materials to generate electrocatalyst inks. Suitable electrically conductive support materials may be selected from the group consisting of carbon black powders, graphitized carbon blacks, carbon nanotubes (CNT), carbon nanohorns (CNH), graphenes, carbon platelets, carbon fibers, electrically conductive ceramic powders, ceramic nano-tubes, electro-conductive polymer materials and mixtures and combinations thereof. Generally, with the addition of electrically conductive support material, electrocatalyst inks can be prepared which are suitable for manufacture of functional electrocatalyst layers and electrodes for PEM fuel cell and PEM water electrolysers. Such electrodes (i.e. anodes and/or cathode electrodes) can be prepared by e.g. casting or printing these inks on suitable substrate materials and subsequently drying/evaporating the liquid medium (solvent).

Compared to the conventional route of preparing electrocatalyst inks, which typically includes first synthesizing an electrocatalyst powder from water soluble metal precursors, separating and drying it, and then mixing it with an ionomer dispersion, the method of the present invention enables a very simple, cost effective and environmentally clean preparation route.

Thus, a further embodiment of the present invention is the use of the colloidal dispersions described previously for the production of electrocatalyst inks comprising, in addition to the precious metal particles and the ionomer, an electrocatalyst support, preferably an electrically conductive support. In a particularly preferred embodiment, this support is a conductive carbon material or a conductive ceramic material.

Generally, for the preparation of a catalyst ink, the colloidal dispersion of the present invention is mixed with the electrically conductive or non-conductive support material after reduction/precipitation of the precious metal nano-particles, as already detailed above. Alternatively, the support material may be added to the liquid composition before or during the process of reduction/precipitation of the precious metal nano-particles induced by the reducing agent. As an example, the support material may be introduced before or after the intimate mixing of the precious metal precursor with the ionomer dispersion, and before or shortly after the introduction of the reducing agent in the composition.

Therefore, in a further embodiment, the present invention is directed to a method comprising dispersing the precious metal precursor in an ionomer dispersion, and reducing the precious metal precursor to nano-sized particles with the aid of a reducing agent in the presence of a support material, preferably a electrically conductive support material, such as a carbon-based material or a conductive ceramic material, to obtain an electrocatalyst ink.

Alternatively, the acidic ionomer in powder form and the precious metal precursor may be mixed together in a liquid medium, typically water, and the mixture thus obtained may be subjected to a dissolution step, typically at high temperature, as applied to obtain ionomer dispersions (ref to e.g. US 7,893,118), and additionally subjected to high-shear mixing, to obtain a precious metal precursor intimately dispersed within the ionomer dispersion.

As a result of the above described ways of processing, electrocatalyst inks comprising precious metal particles, at least one acidic ionomer material and at least one electrically conductive support material are prepared.

The nominal precious metal loading of the supported electrocatalyst in the ink typically is in the range of 5 to 80 wt.-% of precious metal (e.g. Pt). This can be determined by the formula m_{PM} / m_{PM} + mₛᵤₚₚₒᵣₜ.

These electrocatalyst inks are basically free from additional organic polymers, surfactants, salts, acids and other ionic species. Therefore such electrocatalyst inks are particularly suited for the manufacture of electrode layers with high performance and high durability for membrane-electrode assemblies (MEAs) used in PEM fuel cells, DMFC and PEM water electrolysers (ref to Examples 10-12).

In a further embodiment of the invention, the support material employed in the electrocatalyst inks may be a pre-formed electrocatalyst. The term "pre-formed electrocatalyst" means a state-of-the art electrocatalyst, e.g. platinum or platinum alloy particles supported on carbon black (Pt/C, Pt-alloy/C) or other conductive support materials. Such products are typically used for the preparation of PEM-fuel cell or PEM-electrolysis electrode layers.

In this manner, by means of the present invention, precious metal particles of a type different than those already present on the electrocatalyst can be generated in the electrocatalyst ink, thus obtaining an ink comprising precious metal particles of two different metals, an acidic ionomer, and an electrocatalyst support. As an example, an Ir/C electrocatalyst may be added to a colloidal dispersion of the invention comprising Pt metal nano-particles to obtain an electrocatalyst ink comprising Ir and Pt nano-particles, a carbon black support and an acidic ionomer material.

Alternatively, Pt nano-particles may be precipitated in the presence of an acid-form ionomer on an Ir/C electrocatalyst to obtain an electrocatalyst ink with analogous composition. Such inks may be applied to various substrates to generate electrode layers.

In a further embodiment, such electrocatalyst inks may be dried and comminuted to yield supported composite precious metal/ionomer powder materials. Electrocatalysts made according to such procedures show extended catalytic functionalities and may be used for various applications.

Typically, the precious metal/ionomer weight ratio in such catalyst ink compositions, which contain a support material, is in the range of 1:1 to 1 :30, preferably in the range of 1 :2 to 1:15 and particularly preferred in the range of 1 :3 to 1 :10.

### Preparation of catalytic and electrocatalyst layers

For the preparation of the catalytic layers or electrocatalyst layers (electrodes) according to the present invention, the corresponding colloidal precious metal dispersions and/or electrocatalyst inks may be applied directly to an ionomer membrane. However, they may also be applied to pre-formed electrodes, to a gas diffusion layer (GDL) or to other substrate materials (e.g. polymer films or DECAL release films). For this purpose, it is possible to use various coating processes known to the person skilled in the art, such as doctor blade coating, reel-to-reel knife coating, slot-die coating, spraying, rolling, brushing, screen printing, stencil printing, offset printing, ink-jet printing and gravure printing.

After the application of the colloidal precious metal dispersion or electrocatalyst ink to a suitable substrate, drying of the composition is performed using known drying methods such as, e.g., IR-drying and hot air convection drying. The temperatures for drying are generally in the range from 20 to 150°C. After drying, an annealing step in the temperature range from 130 to 220°C may be applied to consolidate the ionomer in the layer. It should be noted that, in case the layers are thin enough, the drying may be omitted and may be combined with the annealing step.

When using the DECAL technology, the dried catalytic or electrocatalyst layers are transferred to the ionomer membrane by a lamination process employing heat and pressure. Such process is well known to the person skilled in the art.

In summary, the invention relates to colloidal dispersions comprising nano-sized precious metal particles (e.g. platinum or platinum alloy particles) and at least one ionomer component having acidic groups. The method for its manufacturing is based on a neutralization and dissolving process of a suitable precious metal precursor compound with a liquid acidic ionomer component, followed by a reduction step.

Suitable precious metal precursors consist of precious metal atoms, hydrogen atoms, oxygen atoms and optionally carbon atoms. Suitable examples for precursors are H₂Pt(OH)₆, Pd(OH)₂ or Ir(OH)₄, preferred reducing agents are aliphatic alcohols or hydrogen. The invention further relates to pre-products for the manufacture of such colloidal dispersions, namely to compositions which contain precious metal precursors and at least one acidic ionomer compound.

The colloidal precious metal dispersions are preferably water-based and essentially free of contaminants such as salts or surfactants and may further contain electrically conductive or non-conductive support materials.

The colloidal precious metal dispersions can be used for the preparation of catalyst inks, ionomer layers, catalyst layers, electrodes or composite catalyst materials and find broad application in fuel cell technology (e.g. PEMFC, DMFC or water electrolysers).

The products and methods of the present invention may be applied to a wide range of precious metals and precious metal-based alloys. The resulting precious metal based colloidal dispersions do not contain any polluting ionic species.

As outlined in the present specification, the colloidal precious metal dispersions obtained in the present invention can be used for a huge variety of applications such as catalyst inks, electrocatalyst inks, precious metal doped ionomer layers, gas-phase-active catalyst layers, electrocatalyst layers, electrodes and catalyst/ionomer composite powders.

The following examples will describe the invention and the resulting applications in greater detail. This description may not be used to limit the spirit and scope of the invention in any way.

### EXPERI MENTAL SECTION

### Particle size determination

The particle size is determined via TEM using a JEOL 2010F Transmission Electron Microscope (equipped with EDX.) By the term "particle size" it is meant the length of the longest straight chord ("longest dimension") of the particle image as detected by TEM. The particle image is the projection of the particle onto the plane surface on which the particle is at rest during the TEM imaging. E.g., if the particle is spherical, the particle size is the diameter of the particle image circle; if the particle is ellipsoidal, the particle size is given by the length of the major axis of the particle image ellipse.

By the term "average particle size" it is meant the number-average particle size of the distribution, obtained by counting at least 30 randomly taken particles and calculating the number-average (sum of the individual particle sizes divided by number of particles counted).

### Electrochemical Testing

Electrochemical testing is performed in a 50 cm² PEM fuel cell (inhouse built) fitted with graphitic double channel serpentine flow fields having a channel width of 0.8 mm. The cell is operated in counter flow, i.e. the fuel inlet corresponds to the oxidant outlet on the opposite side of the MEA, while the oxidant inlet corresponds to the fuel outlet. The catalyst coated membranes (CCMs) are sealed with glass-fiber-reinforced PTFE gaskets. SGL gas diffusion layers (GDLs) are used in the experiments on anode and cathode side respectively. The cell is equipped with two K-type thermocouples, one in the aluminum end plate and the other in the graphite bipolar plate. The endplates are fitted with resistive heating pads. The cell is air cooled by a ventilator. Operating gases are humidified using cooled/heated bubblers. Hydrogen/air I/V-polarization (current/voltage polarization) measurements are performed with operating pressure of 1.5 bar, with cell temperatures of 85°C and anode/cathode stoichiometries of 1.5/2; anode and cathode humidified at 68°C.

The Open Circuit Voltage (OCV) value of the MEA is taken from the I/V-polarization measurement as the voltage value at zero current ("open circuit").

### EXAMPLE 1

### Preparation of a composition comprising a Pt precursor compound and an acidic ionomer (Pre-product)

A water-based ionomer dispersion Aquivion® D83-24B (Solvay Specialty Polymers S.p.A., Italy; 24 wt.-% ionomer; equivalent weight EW = 830 g/eq) is diluted with D.I. water to obtain an ionomer dispersion with the following composition:

| | |
|---|---|
| 20 wt.-% | solid ionomer |
| 80 wt.-% | D.I. water |

100 g of this ionomer dispersion are charged into a 300 ml vessel. Subsequently, 375 g of milling media (small Zr oxide beads) are added to the dispersion. Then, 1.06 g of dihydrogen hexahydroxy(IV)-platinate H₂Pt(OH)₆ (65 wt.-% Pt, Umicore AG & Co KG, Hanau/Germany) are added to the vessel and milled for 2 hours until the particle size of the Pt precursor compound has reached the micron-size range. A yellow, fluid composition is obtained, containing 0.68 wt.-% of Pt, 19.8 wt.-% of ionomer and a Pt:ionomer ratio of 1:29.

### EXAMPLE 2

### Preparation of a colloidal Pt/ionomer dispersion

A water-based ionomer dispersion Aquivion® D83-24B (Solvay Specialty Polymers S.p.A., Italy; 24 wt.-% ionomer; equivalent weight EW = 830 g/eq) is concentrated by evaporation to obtain a 28.1 wt.-% ionomer dispersion in water. To this dispersion, 1-propanol is added to obtain an ionomer dispersion with the following composition by mass:

| | |
|---|---|
| 18 parts | solid ionomer |
| 36 parts | solvent 1-propanol |
| 46 parts | D.I. water |
| 100 parts | |

100 g of this ionomer dispersion are charged into a 300 ml vessel. Subsequently, 375 g of milling media (small Zr oxide beads) are added to the dispersion. Then, 1.06 g of dihydrogen hexahydroxy(IV)-platinate H₂Pt(OH)₆ (65 wt.-% Pt, Umicore AG & Co KG, Hanau/Germany) are added to the vessel and milled for 2 hours in a bead mill. The precursor compound is very well dispersed in the liquid ionomer with particles in the micrometer size range.

The obtained dispersion is stirred for 24 h and reduced to yield a colloidal dispersion comprising ionomer and metallic platinum particles. The solvent 1-propanol is hereby acting as reducing agent. The average particle size of the Pt particles is in the range of 2 nm (as detected by TEM). The dispersion contains 0.68 wt.-% Pt, 17.8 wt.-% of ionomer; the resulting Pt:ionomer ratio is 1:26.

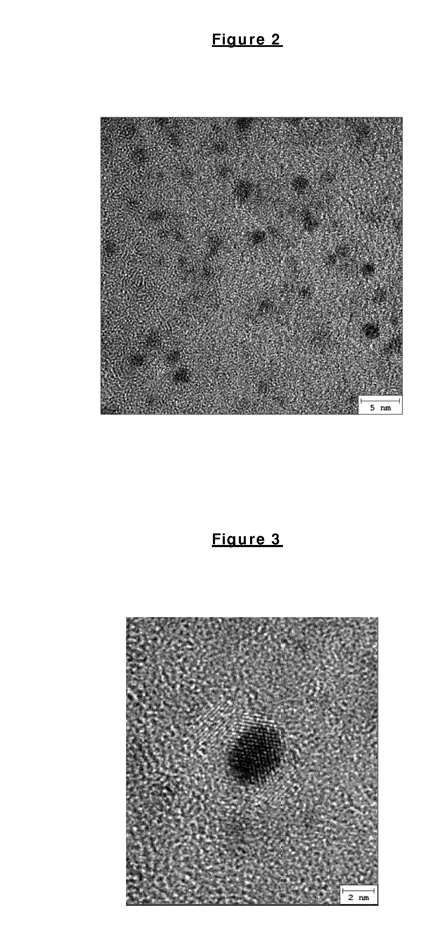

TEM images and particle size ranges are obtained according to the procedures described in the Experimental section. An overview image is shown in **Figure 2****,** where the Pt nano-particles are detected as dark particles. A high-resolution TEM image (200 kV acceleration potential) of a ca. 4 nm size Pt particle is shown in **Figure 3****.** EDX measurements carried out in the TEM equipment confirm that the nano-particles contain platinum.

### EXAMPLE 3

### Preparation of a colloidal Pt/ionomer dispersion

A water-based ionomer dispersion Aquivion® D83-24B (Solvay Specialty Polymers S.p.A., Italy; 24 wt.-% ionomer; equivalent weight EW = 830 g/eq) is concentrated by evaporation to obtain a 28.1 wt.-% ionomer dispersion in water. To this dispersion, ethanol is added to obtain an ionomer dispersion with the following composition by mass:

| | |
|---|---|
| 18 parts | solid ionomer |
| 36 parts | solvent ethanol |
| 46 parts | D.I. water |
| 100 parts | |

100 g of this ionomer dispersion are charged into a 300 ml vessel. Subsequently, 375 g of milling media (small Zr oxide beads) are added to the dispersion.

Then, 1.06 g of dihydrogen hexahydroxy(IV)-platinate H₂Pt(OH)₆ (65 wt.-% Pt, Umicore AG & Co KG, Hanau/Germany) are added to the vessel and milled for 2 hours in a bead mill. The precursor compound is very well dispersed in the liquid ionomer with particles in the micrometer size range.

The obtained dispersion is stirred for 24 h and reduced to yield a colloidal dispersion comprising ionomer and metallic platinum particles. The solvent ethanol is hereby acting as reducing agent. The average particle size of the Pt particles is in the range of 1.5 nm (as detected by TEM). The dispersion contains 0.68 wt.-% of Pt, 17.8 wt.-% of ionomer, resulting in a Pt:ionomer ratio of 1 :26.

### EXAMPLE 4

### Preparation of a colloidal Ir/ionomer dispersion

A water-based ionomer dispersion Aquivion® D83-24B (Solvay Specialty Polymers S.p.A., IT; 24 wt.-% ionomer; equivalent weight EW = 830 g/eq) is concentrated by evaporation to obtain a 28.1 wt.-% ionomer dispersion in water. To this dispersion, 1-propanol is added to obtain an ionomer dispersion with the following composition by mass:

| | |
|---|---|
| 18 parts | solid ionomer |
| 36 parts | solvent 1-propanol |
| 46 parts | D.I. water |
| 100 parts | |

100 g of this ionomer dispersion are charged into a 300 ml vessel. Subsequently, 375 g of milling media (small Zr oxide beads, diameter about 1 mm) are added to the dispersion.

Then, 1.08 g of iridium(IV)-hydroxide (Ir(OH)₄; 75 wt.-% Ir, Umicore AG & Co KG, Hanau/Germany) are added to the vessel and milled for 2 hours in a bead mill. The precursor compound is very well dispersed in the liquid ionomer with particles in the micrometer size range.

The obtained dispersion is stirred for 24 h to yield the final colloidal dispersion comprising ionomer and metallic iridium particles. The average particle size of the Ir particles is in the range of 2.5 nm (detected by TEM). The colloidal dispersion contains 0.80 wt.-% of Ir, 17.8 wt.-% of ionomer, resulting in an Ir:ionomer ratio of 1 :22.

### EXAMPLE 5

### Preparation of a colloidal Pd/ionomer dispersion

A water-based ionomer dispersion Aquivion® D83-24B (Solvay Specialty Polymers S.p.A., IT; 24 wt.-% ionomer; equivalent weight EW = 830 g/eq) is concentrated by evaporation to obtain a 28.1 wt.-% ionomer dispersion in water. To this dispersion, 1-propanol is added to obtain an ionomer dispersion with the following composition by mass:

| | |
|---|---|
| 18 parts | solid ionomer |
| 36 parts | solvent 1-propanol |
| 46 parts | D.I. water |
| 100 parts | |

100 g of this ionomer dispersion are charged into a 300 ml vessel. Subsequently, 375 grams of milling media (small Zr oxide beads) are added to the dispersion.

Then, 1.08 g of palladium(II)-hydroxide (Pd(OH)₂; 75,5 wt.-% Pd, Umicore AG & Co KG, Hanau) are added to the vessel and milled for 2 hours in a bead mill. The precursor compound is very well dispersed in the liquid ionomer with particles in the micrometer size range.

The obtained dispersion is stirred for 24 hours to yield the final colloidal dispersion comprising ionomer and metallic palladium particles. The average particle size of the Pd particles is in the range of 2.5 nm (detected by TEM). The dispersion contains 0.81 wt.-% of Pd, 17.8 wt.-% of ionomer, resulting in a Pd:ionomer ratio of 1:22.

### EXAMPLE 6

### Preparation of a colloidal Pt/ionomer dispersion (hydrogen reduction)

The liquid composition prepared in Example 1 is used for the preparation of a Pt/ionomer dispersion by hydrogen reduction. 100 ml of the water-based composition prepared in Example 1 are placed in a glass vessel with stirrer and gas inlet and outlet provisions. Diluted hydrogen (forming gas 95/5) is slowly bubbled through the vessel for about 2 hours at a temperature of 22°C. Metallic Pt particles are obtained; the average particle size of the Pt particles is in the range of 4.5 nm (as detected by TEM). The dispersion contains 0.68 wt.-% Pt, 19.8 wt.-% of ionomer, resulting in a Pt:ionomer ratio of 1 :29.

### EXAMPLE 7

### Preparation of a colloidal Pt/ionomer dispersion (Nafion® ionomer)

A commercially available ionomer dispersion (Nafion® D2020, DuPont, USA) is taken in this example. It is a 20 wt.-% ionomer dispersion, containing about 44 wt.-% of 1-propanol and small amounts (<3%) of ethanol and other organics.

100 g of this ionomer dispersion are charged into a 300 ml vessel. Subsequently, 375 g of milling media (small Zr oxide beads) are added to the dispersion.

Then, 1.06 g of dihydrogen hexahydroxy(IV) platinate H₂Pt(OH)₆ (65 wt.-% Pt, Umicore AG & Co KG, Hanau/Germany) are added to the vessel and milled for 2 hours in a bead mill. The precursor compound is very well dispersed in the liquid ionomer with particles in the micrometer size range.

The obtained dispersion is stirred for 24 h and reduced to yield a colloidal dispersion comprising ionomer and metallic platinum particles. The solvents 1-propanol and ethanol are hereby acting as reducing agents. The average particle size of the Pt particles is in the range of 2 nm (as detected by TEM). The dispersion contains 0.68 wt.-% of Pt, 19.8 wt.-% of ionomer, resulting in a Pt:ionomer ratio of 1 :29.

### EXAMPLE 8

### Preparation of a colloidal Pt/ionomer dispersion with carbon black support (electrocatalyst ink)

A water-based ionomer dispersion Aquivion® D83-24B (Solvay Specialty Polymers S.p.A., IT; 24 wt.-% ionomer; equivalent weight EW = 830 g/eq) is diluted with D.I. water and 1-propanol to obtain an ionomer dispersion with the following composition by mass:

| | |
|---|---|
| 9.9 parts | solid ionomer |
| 39.6 parts | solvent 1-propanol |
| 50.5 parts | D.I. water |
| 100 parts | |

91 g of this ionomer dispersion are charged into a 300 ml vessel. Subsequently, 375 grams of milling media (small Zr oxide beads) are added to the dispersion. Then, 2.25 g of dihydrogen hexahydroxy(IV)-platinate H₂Pt(OH)₆ (65 wt.-% Pt, Umicore AG & Co KG, Hanau/Germany) are added to the vessel and milled for 10 minutes in a bead mill. After the milling step, 9 grams of carbon black (XPB293, Orion Engineered Carbons GmbH, Hanau Germany) are added under stirring into the vessel.

After the addition of carbon black, the dispersion is milled for 2 hours. After discharging the mill, the ink is further stirred for 12 hours to obtain an electrocatalyst ink containing Pt particles supported on carbon black and ionomer. The nominal platinum loading of the Pt/C catalyst in the ink is 14 wt.-% (as determined by mₚₗₐₜᵢₙᵤₘ / mₚₗₐₜᵢₙᵤₘ + m_{carbon}).

The colloidal dispersion (electrocatalyst ink) contains 1.4 wt.-% of Pt, 8.8 wt.-% of ionomer, resulting in a Pt:ionomer ratio of 1:6.

### EXAMPLE 9

### Preparation of a colloidal Pt/ionomer dispersion with carbon black support (electrocatalyst ink)

A water-based ionomer dispersion Aquivion® D83-24B (Solvay Specialty Polymers S.p.A., IT; 24 wt.-% ionomer; equivalent weight EW = 830 g/eq) is diluted with D.I. water and 1-propanol to obtain an ionomer dispersion with the following composition by mass:

| | |
|---|---|
| 5.9 parts | solid ionomer |
| 41.5 parts | solvent 1-propanol |
| 52.6 parts | D.I. water |
| 100 parts | |

152 g of this ionomer dispersion are charged into a 300 ml vessel. Subsequently, 563 g of milling media (small Zr oxide beads) are added to the dispersion. Then, 9 g of carbon black (XPB293, Orion Engineered Carbons GmbH) are added to the vessel and milled for 10 minutes in a bead mill. After the milling step, 2.25 g of dihydrogen hexahydroxy(IV)-platinate H₂Pt(OH)₆ (65 wt.-% Pt, Umicore AG & Co KG, Hanau/Germany) are added under stirring into the vessel. After the addition of H₂Pt(OH)₆, the dispersion is milled for 2 hours. After discharging the mill, the ink is further stirred for 12 h to obtain an electrocatalyst ink containing Pt particles supported on carbon black and ionomer. The nominal platinum loading of the Pt/C catalyst in the ink is 14 wt.-% (as determined by the equation mₚₗₐₜᵢₙᵤₘ / mₚₗₐₜᵢₙᵤₘ + m_{carbon}).

The electrocatalyst ink contains 0.9 wt.-% of Pt, 5.5 wt.-% of ionomer, resulting in a Pt:ionomer ratio of 1:6.

### EXAMPLE 10

### Use of electrocatalyst ink for manufacturing electrode layers

a) Preparation of anode catalyst ink: Electrocatalyst ink of Example 8 is used as anode catalyst ink to prepare the anode electrode layer EL1 with a platinum loading 0.07 mgPt/cm².
b) Preparation of cathode catalyst ink: A standard catalyst ink comprising a carbon supported platinum catalyst (40 wt.-% Pt/C, Umicore AG & Co KG, Hanau) and ionomer component (Aquivion® D83-24B, 24 wt.-% ionomer in water, Solvay Specialty Polymers S.p.A., Italy) is used as cathode ink to prepare the cathode electrode layer EL2 with a platinum loading 0.4 mgPt/cm².
c) Preparation of a CCM: A three-layer MEA (CCM) comprising electrode layers EL1, EL2 and an ionomer membrane (layer structure EL1/membrane/EL2) is prepared according to the following procedure:

In the first step, the electrocatalyst inks for the resulting electrode layers EL1 (anode) and EL2 (cathode) are applied on a DECAL release film by knife-coating anode ink a) and cathode ink b) and subsequently drying the wet catalyst layers.

In the second step, the electrode layer precursors EL1-DECAL and EL2-DECAL are transferred from the DECAL release film to the ionomer membrane (Nafion® NR211, Du Pont, USA) by positioning the electrode precursors on each side of the ionomer membrane (with electrodes facing the membrane) and applying heat and pressure. A CCM is obtained.
d) Preparation of the MEA: The CCM is combined with a first gas diffusion layer GDL1, attached to the opposite side of the first electrode layer EL1 from the membrane, and a second gas diffusion layer GDL2, attached to the opposite side of the second electrode layer EL2 from said membrane. The gas diffusion layers GDL1 and GDL2 are combined to the CCM directly in the PEM-FC.
e) Electrochemical testing (ref to Experimental section): The MEA shows a state of the art performance of 628 mV at 1.2 A/cm² (0.75 W/cm²) in hydrogen/air operation at 85°C.

### EXAMPLE 11

### Use of electrocatalyst ink for manufacturing electrode layer

The preparation of a CCM and MEA is repeated as in Example 10, except that the electrocatalyst ink of Example 9 is used to prepare the anode electrode layer EL1 with a platinum loading 0.07 mgPt/cm².

Electrochemical testing (ref to Experimental section): The MEA shows a state of the art performance of 651 mV at 1.2 A/cm² (0.78 W/cm²) in hydrogen/air operation at 85°C.

### EXAMPLE 12

### Use of colloidal Pt dispersions for manufacturing catalytic combustion layers

a) Preparation of anode catalyst ink: A standard catalyst ink comprising a 20 wt.-% Pt/C catalyst (Umicore AG & Co KG, Hanau, Germany) and ionomer component (Aquivion® D83-24B, 24 wt.-% ionomer in water, Solvay Specialty Polymers S.p.A., Italy) is used as anode ink to prepare the anode electrode layer EL1 with a platinum loading 0.1 mgPt/cm².
b) Preparation of cathode catalyst ink: A standard catalyst ink comprising a carbon supported platinum catalyst (40 wt.-% Pt/C, Umicore AG & Co KG, Hanau) and ionomer component (Aquivion® D83-24B, 24 wt.-% ionomer in water, Solvay Specialty Polymers S.p.A., Italy) is used as cathode ink to prepare the cathode electrode layer EL2 with a platinum loading 0.4 mgPt/cm².
c) Preparation of catalytic combustion layer (CCL): The colloidal Pt/ionomer dispersion (as prepared in Example 2) is applied onto an ionomer membrane (Nafion® NR211, Du Pont; USA) by knife-coating and subsequently drying the wet layer at 100°C for 10 minutes. The obtained Pt-doped ionomer layer (catalytic combustion layer CCL) has a thickness of 3 µm and a loading of 0.025 mgPt/cm².
d) Preparation of a CCM: A four-layer MEA (CCM) comprising electrode layers EL1, EL2, catalytic combustion layer (CCL) and an ionomer membrane (layer structure EL1-anode/membrane/CCL/cathode-EL2) is prepared according to the following procedure:

In the first step, the electrocatalyst inks for the resulting electrode layers EL1 and EL2 are applied on a DECAL release film by knife-coating the corresponding anode and cathode inks and drying the wet layers thus obtained.

In the second step, the electrode layer precursors EL1-DECAL and EL2-DECAL are transferred from the DECAL release film to the ionomer membrane (Nafion® NR211, Du Pont, USA) with the applied CCL (on the cathode side) by positioning the electrode precursors on each side of the membrane (with electrodes facing the membrane) and applying heat and pressure.
d) Preparation of the MEA: The CCM thus obtained is combined with a gas diffusion layers as described in Example 10 d).
e) Electrochemical testing (ref to Experimental section): The MEA shows an increased Open circuit voltage (OCV) of 1.021 V compared to 0.980 V for a CCM with the same configuration, however without a catalytic combustion layer (CCL) in hydrogen/air operation at 85°C.

## Claims

1. A liquid composition comprising a precious metal precursor compound and at least one acidic ionomer compound, said precious metal precursor compound consisting of precious metal atoms, hydrogen atoms, oxygen atoms and optionally carbon atoms.

2. The composition according to claim 1, wherein the precious metal precursor compound has a low water solubility in the range of 0.0001 to 0.1 mol/l (as determined at 22°C).

3. The composition according to claim 1 or 2, wherein the precious metal of the precursor compound is selected from the group consisting of platinum (Pt), palladium (Pd), rhodium (Rh), iridium (Ir), ruthenium (Ru), gold (Au), silver (Ag) and mixtures and combinations thereof, preferably from the group consisting of platinum (Pt); palladium (Pd), iridium (Ir) and mixtures and combinations thereof.

4. The composition according to any one of claims 1 to 3, wherein the precious metal precursor compound is a precious metal hydroxide, a precious metal hydroxo complex, a hydrated oxide of a precious metal or a mixture or combination thereof.

5. The composition according to any one of claims 1 to 4, wherein the precious metal precursor compound is selected from the group consisting of Ag(OH), Ag₂O x n H₂O, Au(OH)₃, H₂Pt(OH)₆, PtO₂ x n H₂O, Pd(OH)₂, PdO x n H₂O, Ir(OH)_{3,} Ir(OH)₄, H₂Ir(OH)₆, Ir₂O₃ x n H₂O, IrO₂ x n H₂O, Ru(OH)₃, Ru₂O₃ x n H₂O, Rh(OH)₃, Rh₂O₃ x n H₂O (wherein n is a numeral between 0.1 and 10) and mixtures and combinations thereof.

6. The composition according to any one of claims 1 to 5, further comprising a base metal compound selected from the group of base metal hydroxides, base metal oxides and base metal carbonates and mixtures and combinations thereof.

7. The composition according to claim 6, wherein the base metal compound is selected from the group consisting of Co(OH)₂, Ni(OH)₂, Cu(OH)₂, Mn(OH)₂, Cr(OH)₃, CoO, NiO, Cu₂O, CuO, MnO, MnO₂, Cr₂O₃, COC0₃, NiCO₃, CuCO₃, MnCO₃, Cr₂(CO₃)₃ and mixtures and combinations thereof.

8. The composition according to any one of claims 1 to 7, wherein the at least one acidic ionomer is an acidic perfluorinated ionomer compound.

9. The composition according to any one of claims 1 to 8, wherein the at least one acidic ionomer compound comprises acidic groups selected from the group consisting of sulfonic acid groups (-SO₃H), carboxylic acid groups (-COOH), phosphonic acid groups (-PO₃H₂), bis-sulfonyl imide groups (R_{f}-SO₂-NH-SO₂-R'_{f}), bis-carbonyl imide groups (R_{f}-CO-NH-CO-R'_{f}) and sulfonyl-carbonyl imide groups (R_{f}-SO₂-NH-CO-R'_{f}), wherein R_{f} and R'_{f} are fluorine-containing carbon chains; and mixtures and combinations thereof.

10. The composition according to any one of claims 1 to 9, further comprising a reducing agent.

11. The composition according to claim 10, wherein the reducing agent is an aliphatic alcohol selected from the group consisting of methanol, ethanol, 1-propanol, iso-propanol, 1-butanol and mixtures and combinations thereof.

12. A colloidal dispersion comprising nano-sized precious metal particles stabilized by an acidic ionomer compound, said colloidal dispersion being obtained by a reduction process of the composition as defined in any one of claims 1 to 11.

13. The colloidal dispersion according to claim 12, said colloidal dispersion being obtained by a reduction process for a time period of 1 to 120 hours at temperatures in the range of 5 to 40°C, preferably at temperatures in the range of 20 to 25°C.

14. The colloidal dispersion according to claim 12 or 13, wherein the nano-sized precious metal particles have an average particle size in the range of 0.5 nm to 100 nm, preferably in the range of 1 nm to 50 nm and particularly preferred in the range of 2 nm to 20 nm (as detected by TEM).

15. The colloidal dispersion according to any one of claims 12 to 14, further comprising electrically conductive and/or electrically non-conductive support materials.

16. The colloidal dispersion according to claim 15, wherein the electrically conductive support material is selected from the group consisting of carbon black powders, graphitized carbon blacks, carbon nanotubes (CNT), carbon nanohorns (CNH), graphenes, carbon platelets, carbon fibers, electrically conductive ceramic powders, ceramic nano-tubes, electro-conductive polymer materials and mixtures and combinations thereof.

17. The colloidal dispersion according to claim 15, wherein the electrically non-conductive support material is selected from the group consisting of alumina, silica, titania, ceria, zirconia, calcium carbonate, barium sulfate and mixtures and combinations thereof.

18. A method for preparing a colloidal, precious metal dispersion comprising precious metal particles and an acidic ionomer, comprising the steps of
(a) mixing at least one precious metal precursor compound consisting of precious metal atoms, hydrogen atoms, oxygen atoms and optionally carbon atoms with an acidic ionomer,
(b) reducing the precious metal precursor compound with a reducing agent to form precious metal particles stabilized by said acidic ionomer.

19. The method according to claim 18, wherein the precious metal precursor compound has a water solubility in the range of 0.0001 to 0.1 mol/l (as determined at 22°C).

20. The method according to claim 18 or 19, wherein the precious metal is selected from the group consisting of platinum (Pt), palladium (Pd), rhodium (Rh), iridium (Ir), ruthenium (Ru), gold (Au), silver (Ag) and mixtures and combinations thereof, preferably from the group consisting of platinum (Pt); palladium (Pd), iridium (Ir) and mixtures and combinations thereof.

21. The method according to any one of claims 18 to 20, wherein the precious metal precursor compound is a precious metal hydroxide, a precious metal hydroxy complex, a hydrated oxide of a precious metal or mixtures or combinations thereof.

22. The method according to any one of claims 18 to 21, wherein the precious metal precursor compound is selected from the group consisting of Ag(OH), Ag₂O x n H₂O, Au(OH)₃, H₂Pt(OH)₆, PtO₂ x n H₂O, Pd(OH)₂, PdO x n H₂O, Ir(OH)₃, Ir(OH)₄, H₂Ir(OH)₆, Ir₂O₃ x n H₂O, IrO₂ x n H₂O, Ru(OH)₃, Ru₂O₃ x n H₂O, Rh(OH)₃, Rh₂O₃ x n H₂O and mixtures and combinations thereof.

23. The method according to any one of claims 18 to 22, wherein a base metal compound is added in step (a), said base metal compound being selected from the group of base metal hydroxides, base metal oxides, base metal carbonates and mixtures and combinations thereof.

24. The method according to claim 23, wherein the base metal compound is selected from the group consisting of Co(OH)₂, Ni(OH)₂, Cu(OH)₂, Mn(OH)₂, Cr(OH)₃, CoO, NiO, Cu₂O, CuO, MnO, MnO₂, Cr₂O₃, CoCO₃, NiCO₃, CuCO₃, MnCO₃, Cr₂(CO₃)₃ and mixtures and combinations thereof.

25. The method according to any one of claims 18 to 24, wherein the acidic ionomer is an acidic perfluorinated ionomer compound.

26. The method according to any one of claims 18 to 25, wherein the acidic ionomer comprises acidic groups selected from the group consisting of sulfonic acid groups (-SO₃H), carboxylic acid groups (-COOH), phosphonic acid groups (-PO₃H₂), bis-sulfonyl imide groups (R,-SO₂-NH-SO₂-R'_{f}), bis-carbonyl imide groups (R_{f}-CO-NH-CO-R'_{f}) and sulfonyl-carbonyl imide groups (R_{f}-SO₂-NH-CO-R'_{f}), wherein R_{f} and R'_{f} are fluorine-containing carbon chains; and mixtures and combinations thereof.

27. The method according to any one of claims 18 to 26, wherein the reducing agent is selected from the group consisting of hydrogen, aliphatic alcohols, hydrazine, formaldehyde, formic acid, oxalic acid and mixtures and combinations thereof.

28. The method according to any one of claims 18 to 27, wherein the reducing agent is selected from the group consisting of methanol, ethanol, 1-propanol, iso-propanol, 1-butanol and mixtures and combinations thereof.

29. The method according to any one of claims 18 to 28, wherein the precious metal precursor compound is dihydrogen-hexahydroxo-(IV) platinate [H₂Pt(OH)₆], iridium (IV) hydroxide [Ir(OH)₄] or palladium (II) hydroxide [Pd(OH)₂].

30. The method according to any one of claims 18 to 29, wherein the mixing step (a) and the reducing step (b) are conducted separately.

31. The method according to any one of claims 18 to 29, wherein the mixing step (a) and the reducing step (b) are conducted simultaneously within a time period of 1 to 120 hours, preferably within a time period of 1 to 48 hours.

32. The method according to any one of claims 18 to 31, further comprising adding an electrically conductive and/or electrically non-conductive support material.

33. The method according to claim 32, wherein the electrically conductive support material is selected from the group consisting of carbon black powders, graphitized carbon blacks, carbon nanotubes (CNT), carbon nanohorns (CNH), graphenes, carbon platelets, carbon fibers, electrically conductive ceramic powders, ceramic nano-tubes, electro-conductive polymer materials and mixtures and combinations thereof.

34. The method according to claim 32, wherein the electrically conductive support material is a supported platinum or platinum alloy catalyst.

35. Catalyst ink, free of support material, comprising nano-sized precious metal particles and at least one acidic ionomer, obtainable by the method according to any one of claims 18 to 31.

36. Catalyst ink comprising nano-sized precious metal particles, at least one acidic ionomer and electrically conductive or non-conductive support material, obtainable by the process according to claims 32 to 34.

37. Use of the catalyst ink according to claim 35 for the manufacture of gas-phase active catalytic ionomer layers and catalytic combustion layers.

38. Use of the catalyst ink according to claim 36 for the manufacture of catalyst layers, electrode layers, gas diffusion electrodes (GDEs), catalyst-coated membranes (CCMs) and membrane-electrode assemblies (MEAs) for PEM fuel cells (PEMFC), direct-methanol fuel cells (DMFC) or PEM water electrolyzers.

39. Use of the catalyst ink according to claim 36 for the manufacturing of composite catalyst powders comprising preciousmetal nanoparticles, support material and an acidic ionomer.

40. A colloidal dispersion comprising nano-sized precious metal particles stabilized by an acidic ionomer compound, said colloidal dispersion being essentially free from additional components such as surfactants, inorganic salts, halide ions, mineral acids or other anionic or cationic species.
